# EUROPÄISCHE PATENTSCHRIFT

(11) **EP 1 015 138 B1**
(45) Veröffentlichungstag und Bekanntmachung des Hinweises auf die Patenterteilung: **28.08.2002**
(21) Anmeldenummer: 98954209.7
(22) Anmeldetag: 21.09.1998
(51) Int. Cl.: B07C 3/20

(54) **VERFAHREN UND ANORDNUNG ZUM ERKENNEN VON VERTEILINFORMATIONEN AUF SENDUNGEN**
METHOD AND DEVICE FOR RECOGNITION OF DELIVERY DATA ON MAIL MATTER
PROCEDE ET DISPOSITIF DE RECONNAISSANCE DES DONNEES DE DISTRIBUTION FIGURANT SUR LES ENVOIS POSTAUX

(30) Priorität: 27.09.1997 DE 19742771
(43) Veröffentlichungstag der Anmeldung: 05.07.2000
(73) Patentinhaber: SIEMENS AKTIENGESELLSCHAFT, 80333 München (DE)
(72) Erfinder: ROSENBAUM, Walter, F-75116 Paris (FR)
(86) Internationale Anmeldenummer: DE9802801
(87) Internationale Veröffentlichungsnummer: WO99016559

(56) Entgegenhaltungen:
- EP-A- 0 589 119
- EP-A- 0 726 540
- FR-A- 2 591 512
- US-A- 4 921 107
- US-A- 5 558 232

## Beschreibung

Die Erfindung betrifft ein Verfahren und eine Anordnung nach den Oberbegriffen der unabhängigen Ansprüche und ist besonders vorteilhaft bei der Ermittlung von in nichtalphabetischen Schriften geschriebenen Verteilinformationen auf Sendungen einsetzbar.

Systeme zum automatischen Lesen von Verteilinformationen, insbesondere Adressen (OCR) sind auf dem Gebiet der Briefbearbeitung wohlbekannt und z.B. in der DE 195 31 392 beschrieben. Mit modernen OCR-Briefsortieranlagen sind Bearbeitungsraten von 10 Briefen pro Sekunde, d. h. 36.000 Briefen pro Stunde und mehr erreichbar. Die Erkennungszuverlässigkeit variiert jedoch stark mit der Schriftart und Gesamtqualität der auf die Oberfläche der Briefe aufgebrachten Adreßinformation. Im Falle einer erfolgreichen Erkennung kann der betreffende Brief mit einem maschinenlesbaren Barcode versehen werden. Dieser Barcode erlaubt eine weitere mechanische Bearbeitung bis zu einer beliebigen gewünschten Sortierordnung. Insbesondere ermöglicht die Verwendung von Barcodes eine Sortierung der Briefe bis zur Sortierebene des Postgangs, bei der Briefe entsprechend der Reihenfolge ihrer Verteilung durch den Zusteller sortiert werden.

Ökonomische Trends und ein zunehmendes Postaufkommen im asiatischen Raum haben zu erhöhten Anstrengungen bei der automatischen Erkennung von östlichen Schriften geführt, um Kosten zu begrenzen und den Postservice zu erhöhen. Dabei treten gegenüber der Situation in westlichen Ländern, in denen die Postautomation eine bereits etablierte Technologie darstellt, neue Anforderungen an die Erkennungssysteme auf, die daher stammen, daß in den meisten Staaten des asiatischen Beckens chinesische Schriftzeichen zum lokalen Adressieren der Post eingesetzt werden. Chinesische Schriftzeichen sind, anders als die Buchstaben westlicher alphabetischer Schriften, als Ideogramme aufgebaut. Jedes dieser Ideogramme kann ein Wort repräsentieren. Statt eines Alphabets mit einer Menge von dreißig bis sechzig Buchstaben sind 3.000 bis 6.000 verschiedene chinesische Schriftzeichen im täglichen Gebrauch, jedes mit einer eigenen charakteristischen Form. Diese praktische Nichtabgeschlossenheit des chinesischen Schriftzeichensystems und die ideographische Struktur der einzelnen Zeichen führt zu einer verminderten Effektivität von OCR-Systemen im Vergleich zu westlichen alphabetischen Schriftsystemen. Darüber hinaus werden Probleme dadurch verursacht, daß auf den Postsachen die Adresse entweder in vertikaler oder horizontaler Richtung orientiert erscheint und daß häufig Mischungen aus chinesischen und westlichen Schriften auftreten.

Da generell die Erkennungsraten der automatischen Lesesysteme sowohl für westliche als auch für chinesische Schriftzeichen sehr variieren, ist es notwendig, diese durch verschiedene Formen von manueller Intervention zu unterstützen. Die einfachste Intervention ist bei Zurückweisung nicht automatisch lesbarer Briefe die Durchführung eines Handsortierverfahrens. Allerdings sind die dadurch entstehenden Kosten mit zunehmenden Arbeitskosten unökonomisch hoch. Hinzu kommt, daß solche handsortierte Post auch zu einem späteren Zeitpunkt nicht mehr ohne weiteres mechanisch weitersortiert werden kann, so daß zwei voneinander getrennte Ströme von Sendungen erzeugt werden, die wiederum manuell zu einem bestimmten Zeitpunkt verschmolzen werden müssen.

Um diese Nachteile manueller Sortierung von OCR-zurückgewiesenen Sendungen zu vermeiden, sind verschiedene Verfahren für eine manuelle Codierung von Poststücken entwickelt worden. Alle diese Verfahren verwenden Interventionen durch Operateure, um Barcodes auf die Sendungen auf eine Weise aufzubringen, die konsistent ist mit dem Erfordernis, eine mechanische Sortierung durch die gleichen Maschinen vorzunehmen, die OCR-gelesene und barcodierte Post bearbeiten.

Ein weiteres Verfahren, um zurückgewiesene Poststücke zu codieren, verwendet sogenannte manuelle Codierplätze. An diesen manuellen Codierplätzen werden die Sendungen physikalisch hintereinander einem Operateur vorgeführt, wobei der Operateur für jedes dieser Sendungen so viel Information codiert wie notwendig ist, um den Bestimmungsort eindeutig zu identifizieren. Dabei wird die eingegebene Adresse mittels eines Verzeichnisses in einen Sortierbarcode umgewandelt, der auf die Sendung aufgebracht wird. Die codierten Sendungen werden dann mittels Barcodesortierern (BCS), die mechanisch identisch mit OCR-geeigneten BCS sind, weiterbearbeitet. Solche manuellen Codierplätze wurden als erste von der US-Post und der Royal Mail in den 70er Jahren eingeführt. Die Hauptnachteile solcher Vorrichtungen bestehen in der notwendigen Entfernung von Sendungen aus dem OCR-Sendungsstrom und ergonomischen Schwierigkeiten für den Operateur beim Erkennen der ihm vorbeigeführten Sendungen.

Der nächste Fortschritt in der Behandlung von OCR-zurückgewiesener Sendungen war die Entwicklung von On-line-Videocodiersystemen (OVS). In einem OVS wird ein Videobild der Sendung einem Operateur zum Codieren vorgeführt, statt der physikalischen Sendung bei den manuellen Codierplätzen. Das Videobild wird dem Operator gezeigt, während die physikalische Sendung in Verzögerungsstrecken gehalten wird. In diesen Verzögerungsstrecken wird normalerweise die Sendung in Bewegung gehalten für eine Zeitdauer, die ausreicht, damit der OVS-Operateur die notwendige Sortierinformation für das betreffende Bild eingibt. Die üblichen Verzögerungsstrecken erlauben eine Verzögerung zwischen 10 und 30 Sekunden. Je länger die Verzögerungsstrecke, desto größer sind die Kosten sowie die Erfordernisse für Wartung und die physische Größe der Anlage.

Das Hauptproblem bei der Verwendung von OVS ist, daß die zur Verfügung stehende Zeit lediglich ausreicht für eine sorgfältige Eingabe der Postleitzahl (ZIP) oder des Postcodes (PC), es sei denn, daß unpraktikabel lange Verzögerungsstrecken verwendet werden.
Solange ein ZIP oder PC vorhanden ist, kann OVS auch für mit chinesischen Zeichen adressierte Sendungen effektiv eingesetzt werden. Allerdings ist der Anteil solcher Sendungen in vielen östlichen Ländern sehr gering und wird es auch in der vorhersehbaren nächsten Zukunft bleiben.
Daher wurden spezielle Codierverfahren entwickelt, um die notwendige On-line-Verzögerungszeit möglichst gering zu halten.

Um die Codierproduktivität zu erhöhen und/oder die Angabe von sämtlichen Adreßelementen, d. h. ZIP/PC, Straße/Postfach, Adressat/Postfach, Adressat/Firma, zu ermöglichen, sind im Stand der Technik verschiedene Methoden entwickelt worden. Im wesentlichen sind dies:

### Vorschau-Codierung

Bei der Vorschau-Codierung erfolgt ein simultanes Display der Bilder von zwei Sendungen; eines über dem anderen. Hierbei ist das niedrigere Bild das aktive, d.h. dessen Daten codiert werden. Nach einem geeigneten Training ist es Operateuren möglich, die Information auf dem unteren Bild zu codieren, während sie bereits die Adreßinformation vom oberen Bild visuell erfassen. Das obere Bild wird anschließend aktiv und der Prozeß wird fortgesetzt. Mit der Vorschau-Codierung ist es möglich, durch eine vollständige Überlappung der kognitiven und motorischen Funktionen beim Codieren aufeinanderfolgender Abbilder die Operateur-Produktivität zu verdoppeln.

### Extraktionscodierung

Da bei den praktisch erreichbaren On-line-Verzögerungs-Zeiten lediglich die ZIP/PC Adresselemente verläßlich vom Operateur eingegeben werden können, werden beim Extraktionscodieren bestimmte Schlüsselbestandteile der sich auf die Straße beziehenden Adressbestandteile eingegeben. Üblicherweise basiert die Extraktionscodierung auf speziell entwickelten Regeln, bei denen ein Code fester Länge als Zugangsschlüssel zu einem Adressverzeichnis verwendet wird. Zum Beispiel verwendet die Royal Mail eine Extraktionsformel, die auf den ersten drei und den letzten zwei Buchstaben basiert. Dabei müssen Sonderregeln vom Operator auswendig gelernt werden, um überflüssige Adressinformationen zu vermeiden und bestimmte unterscheidende Merkmale wie z.B. Richtungen zu berücksichtigen, z.B. Ost, West oder Kategorien z.B. Street, Lane, Road.

Extraktionscodierung besitzt trotz ihrer gewissen Effektivität einige größere Nachteile; insbesondere komplexe Extraktionsregeln, die häufig die Berücksichtigung des Endes eines Straßennamens erfordern, während diese Bestandteile bei handgeschriebenen Sendungen üblicherweise am unklarsten geschrieben sind. Außerdem findet man eine signifikant hohe Rate von nicht eindeutigen Extraktionen, bei denen mehrere Einträge in einem Verzeichnis dem Extraktionscode entsprechen, so daß keine eindeutige Sortierentscheidung getroffen werden kann. Desweiteren ist zu berücksichtigen, daß die Eingabeproduktivität der Operateure vermindert wird, sobald vom Operateur Entscheidungen getroffen werden müssen, statt einer einfachen repetitiven Tastatureingabe.

### Komplettierungscodierung

Bei der Komplettierungscodierung wird im Kontrast zur Extraktionscodierung für jede zu codierende Adresse eine variable Eingabe vorgenommen. Im wesentlichen wird bei der Adreßeingabe ein Abgleich mit dem Adreßverzeichnis vorgenommen, bis eine eindeutige Übereinstimmung erreicht ist. Durch die Darstellung des Rests der Adresse, sobald eine eindeutige Teilübereinstimmung identifiziert worden ist, wird ein Beschleunigungseffekt erreicht. Probleme treten bei dieser Technik jedoch dadurch auf, daß dem Operateur ein Eingabestop-Signal zugeführt werden muß und eine Darstellung des identifizierten Adressrests notwendig ist, was zu einer verminderten Eingabeproduktivität führt und eine Vorausschaucodierung unmöglich macht.

Theoretisch können alle beschriebenen Videocodiertechniken auch für Sendungen mit chinesischen Schriftzeichen eingesetzt werden, obwohl das Fehlen von schnellen Eingabetechniken für chinesische Schriftzeichen ihre Brauchbarkeit marginal bleiben lassen.

### Operateur-assistierte OCR-Technik

Zur Erhöhung der on-line zu verarbeitenden Adreßinformation hat die US Post mit operateur-assistierten OCR-Techniken experimentiert. Hierbei wird zur Erhöhung der Effektivität der Teil des Adreßbildes hervorgehoben, bei dem die OCR-Erkennung versagt hat. Da die Operateure bei der Entzifferung von fehlenden Buchstaben langsam sind und zum Teil auch komplexe Erkennungsfehler, z.B. Segmentierungsprobleme auftreten, ist bei diesem Verfahren die Operateurproduktivität häufig niedriger als bei einfacher Wiedereingabe der betreffenden Adresse.

### Off-line Codierung

Da bei keiner der oben erwähnten Codierungstechniken eine ausreichend hohe Produktivität bei reiner On-line-Codierung erreicht wird, wurde kürzlich ein off-line Codiersystem eingeführt, wie in der US PS 49 92 649 beschrieben. Bei diesem System werden Sendungen mit nicht erkannten Adressen mit einer zusätzlichen Information, einer tracking identification (TID) versehen. Die nicht erkannten Sendungen werden extern gespeichert, während die Bilder dieser Sendungen Operateuren zum Codieren präsentiert werden, wobei keine zeitlichen Einschränkungen vorliegen. Anschließend werden die Sendungen TID-Lesegeräten vorgeführt. Die TID wird mit der eingegebenen Adreßinformation verknüpft. Darauf basierend kann auch eine übliche Barcode-Sortierinformation auf die Sendung aufgebracht werden, so daß die betreffende Sendung wie üblicherweise OCR-gelesene Sendungen bearbeitet werden können. Obwohl das off-line-Videocodierverfahren eine effektive Methode zur Codierung sämtlicher Adreßbestandteile darstellt, werden zusätzlich Kapazitäten für die Weiterverarbeitung von mit nichtgelesenen Adressen versehenen Sendungen und eine entsprechend komplexe Logistik verlangt.

Auch die operateur-assistierten OCR-Techniken sind grundsätzlich für die Verarbeitung von Sendungen mit chinesischen Schriftzeichen geeignet, ermöglichen jedoch bisher keine schnelle Eingabe solcher Zeichen.

Diese unbefriedigende Situation wird noch dadurch verschärft, daß an den Operateur relativ hohe Anforderungen hinsichtlich des notwendigen Trainings und erforderlicher Kenntnisse gestellt werden.

Bei einer Videocodierung unter Verwendung von Spracheingabeeinheiten kann zwar eine schnelle Eingabe der Verteilinformationen erfolgen, jedoch werden die zeitlichen Probleme bei der Codierung nur in die Phase der Auswahl der Verteilinformationskandidaten verlagert.

Der in den unabhängigen Ansprüchen 1 und 9 angegebenen Erfindung liegt das Problem zugrunde, Verteilinformationen in Form von Adressen, insbesondere in handgeschriebenen, nichtalphabetischen Schriften, die sich auf Sendungen befinden, unter Einsatz von Spracheingabetechniken mit geringem Auswahlaufwand des Personals schnell zu codieren.
Die Filterung der mittels der Spracheingabe erhaltenen Kandidaten mit den zugehörigen unvollständigen bzw. nichteindeutigen Ergebnissen der OCR-Auswertung ermöglicht eine schnelle automatische Selektion des richtigen Kandidaten, ohne daß der Operateur mit diesem Vorgang betraut ist. Dies ist besonders vorteilhaft bei der Codierung handgeschriebener Adressen in chinesischen Schriftzeichen einsetzbar.

Vorteilhafte Ausführungsformen der Erfindung sind den abhängigen Ansprüchen zu entnehmen.
So ist es günstig, nach Anspruch 2 zur Verringerung des Auswerteaufwandes die numerischen Teile der dargestellten Verteilinformationen mittels Tasten einzugeben.
Nach Anspruch 3 ist es vorteilhaft, zur Selektion der Kandidaten aus der Spracherkennung die in der OCR-Auswertung ermittelte Zeichenanzahl mit der Zeichenanzahl aus der Spracherkennung zu vergleichen und jene Kandidaten auszusortieren, deren Zeichenanzahl von der in der OCR-Auswertung ermittelten Zeichenanzahl mehr als ein statistisch ermittelter Grenzwert abweicht. Hierzu kann gemäß Anspruch 4 das Segmentierungsergebnis verwendet werden.
In einem weiteren vorteilhaften Selektionsverfahren nach Anspruch 5 werden die in der OCR-Auswertung mit Glaubwürdigkeiten ermittelten Zeichen positionsbezogen mit den Zeichen der Kandidaten der Spracherkennung verglichen und der glaubwürdigste, über einem Grenzwert liegende Kandidat ausgewählt. Gemäß Anspruch 6 ist es vorteilhaft, zur Ermittlung eines Straßennamens die Verfahrenschritte:
- Überprüfen in einer Adreßdatei/Straßenverzeichnis auf Vorhandensein;
- Selektion nach Anzahl der Zeichen im Vergleich mit der Anzahl der in der OCR-Auswertung ermittelten Zeichen und
- positionsbezogener Vergleich der Zeichen der Kandidaten und der Zeichen der OCR-Auswertung,
nacheinander auszuführen.
Werden die numerischen Teile der Verteilinformationen mittels Tasten eingegeben, so ist es gemäß Anspruch 7 und 8 vorteilhaft, mit einer OCR-Einheit für Zahlen diese Zahlen zu suchen und mit deren Hilfe die Adreßzeilen, deren Orientierung und die Lage des Namenfeldes in der Adreßzeile zu ermitteln.

Nachfolgend wird die Erfindung anhand von Zeichnungen näher erläutert.
Dabei zeigen
- FIG 1: eine schematische Darstellung einer erfindungsgemäßen Anordnung
- FIG 2: einen Datenfluß bei der Codierung von Sendungen mit chinesischen Schriftzeichen

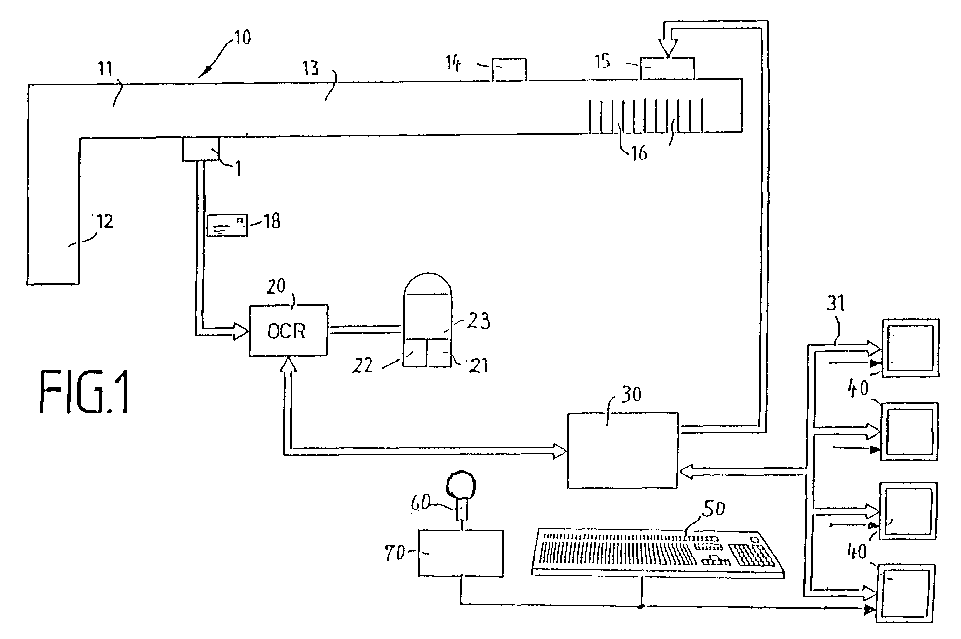

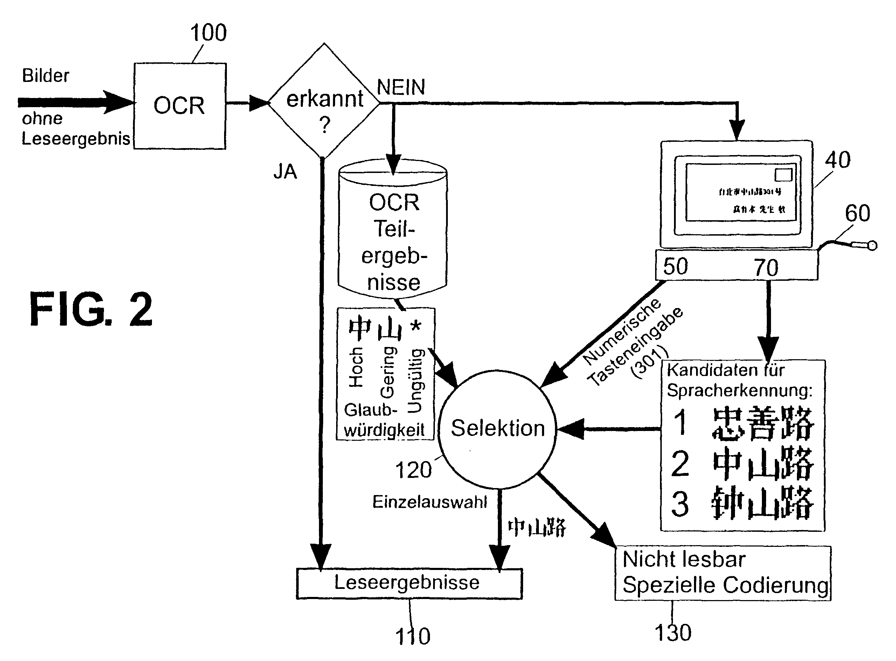

FIG 1 zeigt eine schematische Darstellung einer Briefverteilanlage zur Ausführung des erfindungsgemäßen Verfahrens. Ein OCR-Briefsortierer 10 besteht aus einer Zuführeinrichtung 11, die sukzessive Sendungen aus einem Magazin 12 abzieht und mit ca. 10 Sendungen pro Sekunde zu einem hochauflösenden Videoscanner 17 als Vorrichtung zur Gewinnung von Abbildern der Sendungen transportiert. Anschließend werden die Sendungen in einer Verzögerungsstrecke 13 transportiert. Die Sendungen weisen üblicherweise auf ihrer Oberfläche Verteil-, insbesondere Adreßinformationen auf. In einer OCR-Einheit 20 erfolgt eine Auswertung der Adreßinformationen der Abbilder der Sendungen, die vom Videoscanner 7 gewonnen wurden. Im Fall einer vollständigen Auswertung wird ein Barcodedrucker 4 angesteuert und die Sendung wird mit einem entsprechenden Barcode für die anschließende Sortierung in Sortierfächer 16 versehen. Die OCR-Einheit 20 besteht aus einem oder mehreren Microprozessoren 21 mit assoziiertem Speicher 22, um Abbilder der Sendungen zu speichern. Weiterhin beinhaltet die OCR-Einheit ein Wörterbuch 23 mit ZIP-Codes, Städtenamen und Straßennamen und evtl. weiterer adreßbezogener Information. Bei der Auswertung der Adreßinformation aufweisenden Abbilder erfolgt vorzugsweise eine merkmalsgesteuerte Reduktion der aus dem Adreßverzeichnis gewonnenen Eintragung, so daß eine Art Teilwörterbuch erzeugt wird. Den einzelnen Eintragungen werden dabei Glaubwürdigkeiten zugeordnet, so daß bei der Auswertung eine Anzahl von Daten von als richtig erkannten Adressen erzeugt werden. Die Vorrichtung enthält weiterhin eine Verarbeitungseinheit 30 sowie eine Anzahl Videocodierplätze 40, die mit der Verarbeitungseinheit 30 direkt oder durch ein lokales Netzwerk (LAN) 31 verbunden sind. Vorzugsweise werden Workstations als Videocodierplätze eingesetzt. Falls die OCR-Auswertung eines Abbildes nicht vollständig erfolgreich war, wird dieses Bild von der OCR-Einheit 20 zur Verarbeitungseinheit 30 transferiert, die u.a. einen TID Barcodedrucker 15 steuert und das entsprechende Bild zu einem der Videocodierplätze 40 sendet. Der TID Barcodedrucker 15 bringt auf die entsprechende Sendung einen Identifikationskode TID auf, der es zu einem späteren Zeitpunkt ermöglicht, die ausgewertete Adreßinformation mit der physikalischen Sendung zu verknüpfen. Die Auswertung der Abbilder erfolgt in diesem Fall vorzugsweise off-line, obwohl grundsätzlich bei einer genügend langen Verzögerungszeit auch eine on-line-Auswertung durch Videocodierung möglich ist. Im letzteren Fall kann der TID auch zu einem späteren Zeitpunkt, d.h. wenn die Videocodierung innerhalb einer bestimmten vorgegebenen Zeit nicht zu einer vollständigen Auswertung geführt hat, auf die Sendungen aufgebracht werden.
Wie schematisch angedeutet, ist an jeden Videocodierplatz 40 eine Tastatur 50 zur Tasteneingabe und eine Spracheingabeeinheit, bestehend aus einem Mikrofon 60 und einem Spracherkennungsmodul 70, angeschlossen.
In der Verarbeitungseinheit 30 erfolgt die erfindungsgemäße Selektion eines Kandidaten aus dem Spracherkennungsmodul 70. Wie der FIG 2, die als Beispiel das Erkennen von Adressen in chinesische Schriftzeichen behandelt, zu entnehmen ist, ist es vorteilhaft, aber nicht notwendig, noch eine offline OCR-Einheit 100 einzusetzen, die bei einem unvollständigen bzw. nichteindeutigen Ergebnis noch einmal durchlaufen wird. Ist deren Ergebnis eindeutig bzw. vollständig, so wird es akzeptiert 110 und der Codierungsvorgang ist beendet. Wenn nicht, wird das entsprechende Bild an einen Videocodierplatz 40 mit einer Tastatur 50, einem Mikrofon 60 und einem Spracherkennungsmodul 70 übertragen.
Der Operateur liest die Adresse und spricht den Straßennamen ins Mikrofon 60. Gleichzeitig gibt er mit der Tastatur 50 die Hausnummer ein. Danach erscheint ein neues Bild mit einer nicht eindeutig bzw. vollständig automatisch ausgewerteten Adresse auf dem Bildschirm und ein neuer Codierungsvorgang wird durchgeführt.
Gemäß FIG 2 wurden durch den Spracherkennungsmodul 70 drei Kandidaten, bestehend jeweils aus drei Schriftzeichen, ermittelt. Im Ergebnis der unvollständigen Auswertung in der offline-OCR-Einheit 100 wurden ebenfalls drei Zeichen ermittelt, wobei das erste Zeichen mit hoher Glaubwürdigkeit, das zweite Zeichen mit geringer Glaubwürdigkeit und das dritte Zeichen nicht identifiziert wurde. In der Verarbeitungseinheit 30 erfolgt nun die Selektion 120 der Kandidaten des Spracherkennungsmodul 70. Als erstes wird mit Hilfe der Verarbeitungseinheit 30 überprüft, ob die drei Kandidaten mit der eingegebenen Hausnummer 301 in einem Straßenverzeichnis vorhanden sind. Da dies der Fall ist, erfolgt als nächstes ein Vergleich der Zeichenanzahl. Diese stimmt bei den drei Kandidaten aus der Spracherkennung mit dem Ergebnis der offline-OCR-Einheit 100 -3 Zeichen- überein.
Damit bleiben nach diesem Vergleich die drei Kandidaten in der Wahl und die Schriftzeichen werden positionsbezogen unter Berücksichtigung der Glaubwürdigkeiten verglichen.
In der letzten Stelle konnte die OCR-Einheit 100 kein einzelnes Zeichen identifizieren, so daß für diese Stelle kein Selektionsvergleich durchgeführt werden kann.
In der zweiten Stelle wurde durch die OCR-Einheit 100 ein Schriftzeichen mit geringer Glaubwürdigkeit ermittelt, das die Kandidaten 2 und 3 ebenfalls an der zweiten Stelle aufweisen. Eine Entscheidung ist also noch nicht möglich. Bei einem Vergleich des mit hoher Glaubwürdigkeit in der OCR-Einheit 100 erkannten Zeichens der ersten Stelle mit den entsprechenden Zeichen der Kandidaten, ergibt sich, daß nur Kandidat 2 dieses Zeichen an erster Stelle beinhaltet, so daß dieser Kandidat als eindeutige Lösung akzeptiert wird. Ist eine eindeutige Selektion eines Kandidaten mit einer statistisch festgelegten Glaubwürdigkeitsschwelle nicht möglich, wird das Bild mit der gesuchten Adresse einer speziellen Codierung 130 zugeführt. Die mit Tastatur eingegebenen Zahlen, hier die Hausnummer 301, können dazu genutzt werden, bei einem Ergebnis der OCR-Einheit 100 unterhalb einer festgelegten Glaubwürdigkeit eine erneute OCR-Auswertung durchzuführen, bei der die eingegebenen Zahlen dazu benutzt werden, die Lage und Orientierung der Adreßzeile und das Straßennamengebiet zu ermitteln.
Selbstverständlich ist es genauso möglich, Namen und Zahlen mittels Spracheingabe einzugeben und die ermittelten Kandidaten mit den OCR-Ergebnissen zu filtern bzw. zu selektieren.

## Patentansprüche

1. Verfahren zum Erkennen von Verteilinformationen auf Sendungen mit Hilfe von Videocodierplätzen, an die die aufgenommenen, digitalisierten und abgespeicherten Abbilder der die Verteilinformationen enthaltenden Sendungsoberflächen nach nichteindeutiger automatischer Auswertung der Verteilinformationen in mindestens einer OCR-Einheit einschließlich Abgleich in einem Verzeichnis weitergeleitet werden, mit Eingabe mindestens der Namen der auf dem Bildschirm des jeweiligen Videocodierplatzes dargestellten jeweiligen Verteilinformation mittels einer Spracheingabeeinheit, bestehend aus Mikrofon und Spracherkennungsmodul, wobei mit den unvollständigen und/oder nichteindeutigen Ergebnissen der automatischen OCR-Auswertung die Kandidaten der Spracherkennung selektiert werden.

2. Verfahren nach Anspruch 1, wobei die numerischen Teile der dargestellten Verteilinformationen mittels Tasten eingegeben werden.

3. Verfahren nach Anspruch 1 oder 2, wobei in der OCR-Auswertung die Anzahl der Zeichen in der möglichen Genauigkeit ermittelt wird und mit der Anzahl der entsprechenden Zeichen der Kandidaten der Spracherkennung verglichen wird und jene Kandidaten aussortiert werden, deren Zeichenanzahl von der ermittelten Zeichenanzahl der OCR-Auswertung mehr als ein statistisch ermittelter Grenzwert abweicht.

4. Verfahren nach Anspruch 3, wobei aus dem Ergebnis der Segmentierung der OCR-Auswertung die Zeichenanzahl ermittelt wird.

5. Verfahren nach Anspruch 1 oder 2, wobei die in der OCR-Auswertung ermittelten und mit Glaubwürdigkeiten versehenen Zeichen mit den Zeichen der Kandidaten der Spracherkennung positionsbezogen verglichen werden und der Kandidat mit der glaubwürdigsten, über einem statistisch ermittelten Grenzwert liegenden Übereinstimmung selektiert wird.

6. Verfahren nach Anspruch 1 bis 5, wobei zur Ermittlung eines Straßennamens als
erstes die Straßennamenkandidaten mit den eingegebenen zugehörigen Hausnummern nach ihrem Vorhandensein in einem Straßenverzeichnis selektiert werden,
zweitens die verbliebenen Kandidaten nach der Anzahl der Zeichen im Vergleich mit der ermittelten Anzahl der Zeichen aus der OCR-Auswertung selektiert werden und
drittens die verbliebenen Kandidaten in dem positionsbezogenen Vergleich der Zeichen der Kandidaten mit den Zeichen der OCR-Auswertung selektiert werden.

7. Verfahren nach Anspruch 1 bis 6, wobei mit Hilfe einer Zahlen-OCR-Einheit die mit den Tasten eingegebenen numerischen Teile der Verteilinformationen in den möglichen Adreßfeldern-ROI gesucht werden und anhand der gefundenen Zahlen die gesuchte Adreßzeile und deren Orientierung ermittelt wird.

8. Verfahren nach Anspruch 7, wobei anhand der mittels der Zahlen-OCR-Einheit gefundenen Zahlen und deren Lage das Namensfeld in der Adreßzeile ermittelt wird.

9. Anordnung zum Erkennen von Verteilinformationen auf Sendungen mit
- einer Vorrichtung zur Gewinnung von Abbildern von Sendungen (17),
- einer OCR-Einheit (20,100) zur automatischen Auswertung der die Verteilinformationen aufweisenden Abbilder der Sendungsoberflächen, mit Abgleich in einem Verzeichnis,
- einer Vorrichtung zur Videocodierung der die Verteilinformationen enthaltenden Abbilder der Sendungsoberflächen mit mindestens einem Videocodierplatz (40), der jeweils eine Tastatur (50), einen Bildschirm und eine Spracheingabeeinheit, bestehend aus einem Mikrofon (60) und einem Spracherkennungsmodul (70), besitzt,
- einer Verarbeitungseinheit (30), die die Datenflüsse zwischen den Ein- und Ausgabeeinheiten der Vorrichtung zur Videocodierung und der OCR-Einheit (20,100) steuert, wobei in der Verarbeitungseinheit (30) mit den unvollständigen und/oder nicht eindeutigen Ergebnissen der OCR-Einheit (20,100) die Kandidaten des jeweiligen Spracherkennungsmoduls (70) selektiert werden.

10. Anordnung nach Anspruch 9, wobei in der Verarbeitungseinheit (30) die in der OCR-Einheit (20,100) ermittelte Zeichenanzahl mit der Anzahl der Zeichen der Kandidaten aus dem jeweiligen Spracherkennungsmodul (70) verglichen wird und jene Kandidaten aussortiert werden, deren Zeichenanzahl von der Zeichenanzahl der OCR-Einheit (20,100) mehr als ein statistisch ermittelter Grenzwert abweicht.

11. Anordnung nach Anspruch 9, wobei in der Verarbeitungseinheit (30) die in der OCR-Einheit (20,100) ermittelten und mit Glaubwürdigkeiten versehenen Zeichen mit den Zeichen der Kandidaten aus dem jeweiligen Spracherkennungsmodul (70) positionsbezogen verglichen werden und der Kandidat mit der glaubwürdigsten, über einem statistisch ermittelten Grenzwert liegenden Übereinstimmung selektiert wird.

## Claims

1. Method for recognizing delivery information on items of mail with the aid of video encoding stations, at which the recorded, digitized and stored images of the surfaces of the items of mail containing the delivery information, following non-unambiguous automatic evaluation of the delivery information in at least one OCR unit, including comparison in a directory, are passed on, with the input of at least the name of the respective item of delivery information displayed on the monitor of the respective video encoding station by means of a speech input unit, comprising microphone and speech recognition module, the candidates for the speech recognition being selected using the incomplete and/or non-unambiguous results of the automatic OCR evaluation.

2. Method according to Claim 1, the numeric parts of the items of delivery information displayed being input by means of keys.

3. Method according to Claim 1 or 2, the number of characters being determined with the possible accuracy in the OCR evaluation and compared with the number of corresponding characters in the candidates of the speech recognition, and those candidates whose number of characters differs by more than a statistically determined limiting value from the determined numbers of characters of the OCR evaluation being sorted out.

4. Method according to Claim 3, the number of characters being determined from the result of segmenting the OCR evaluation.

5. Method according to Claim 1 or 2, the characters determined in the OCR evaluation and provided with plausibility values being compared with the characters of the candidates of the speech recognition, on the basis of position, and the candidate with the most plausible agreement lying above a statistically determined limiting value being selected.

6. Method according to Claims 1 to 5, where in order to determine a street name,
firstly the street name candidates with the input associated house numbers being selected in accordance with their presence in a street directory,
secondly the remaining candidates being selected in accordance with the number of characters as compared with the determined number of characters from the OCR evaluation and
thirdly the remaining candidates being selected in the position-based comparison of the characters of the candidates with the characters of the OCR evaluation.

7. Method according to Claims 1 to 6, the numeric parts of the delivery information, input with the keys, being searched for in the possible address fields ROI with the aid of a numeric OCR unit and, by using the numbers found, the address line searched for and its orientation are determined.

8. Method according to Claim 7, the name field in the address line being determined by using the numbers found by means of the numeric OCR unit and their position.

9. Arrangement for recognizing delivery information on items of mail, having
- a device for obtaining images of items of mail (17),
- an OCR unit (20, 100) for the automatic evaluation of the images of the surfaces of the items of mail having the delivery information, with comparison in a directory,
- a device for the video encoding of the images of the surfaces of the items of mail containing the delivery information, having at least one video encoding station (90), which in each case has a keyboard (50), a monitor and a speech input unit, comprising a microphone (60) and a speech recognition module (70),
- a processing unit (30), which controls the data flows between the input and output units of the device for video encoding and the OCR unit (20, 100), the candidates of the respective speech recognition module (70) being selected in the processing unit (30) by using the incomplete and/or non-unambiguous results of the OCR unit (20, 100).

10. Arrangement according to Claim 9, the number of characters determined in the OCR unit (20, 100) being compared in the processing unit (30) with the number of characters of the candidates from the respective speech recognition module (70), and those candidates whose number of characters differs by more than a statistically determined limiting value from the number of characters of the OCR unit (20, 100) being sorted out.

11. Arrangement according to Claim 9, the characters determined in the OCR unit (20, 100) and provided with plausibility values being compared in the processing unit (30) with the characters of the candidates from the respective speech recognition module (70), on the basis of position, and the candidate with the most plausible agreement lying above a statistically determined limiting value being selected.

## Revendications

1. Procédé pour la reconnaissance d'informations de distribution sur des envois postaux à l'aide de postes de codage vidéo auxquels sont retransmises les images prises, numérisées et mémorisées des surfaces d'envois contenant les informations de distribution, après évaluation automatique non unique des informations de distribution dans au moins une unité OCR y compris comparaison dans un répertoire, avec saisie au moins du nom de l'information de distribution respective représentée sur l'écran du poste de codage vidéo respectif au moyen d'une unité de saisie vocale constituée d'un microphone et d'un module de reconnaissance de la parole, dans lequel les candidats de la reconnaissance de la parole sont sélectionnés avec les résultats incomplets et/ou multiples de l'évaluation OCR automatique.

2. Procédé selon la revendication 1, dans lequel on saisit au moyen de touches les parties numériques des informations de distribution représentées.

3. Procédé selon la revendication 1 ou 2, dans lequel on détermine dans l'unité OCR le nombre des caractères avec la précision possible, on le compare au nombre des caractères correspondants des candidats de la reconnaissance de la parole et on élimine les candidats dont le nombre de caractères s'écarte du nombre de caractères déterminé de l'évaluation OCR de plus d'une valeur limite déterminée statistiquement.

4. Procédé selon la revendication 3, dans lequel on détermine le nombre de caractères à partir du résultat de la segmentation de l'évaluation OCR.

5. Procédé selon la revendication 1 ou 2, dans lequel on compare quant à leur position respective les caractères déterminés dans l'évaluation OCR et munis de probabilités aux caractères des candidats de la reconnaissance de la parole et on sélectionne le candidat ayant la coïncidence la plus probable et supérieure à une valeur limite déterminée statistiquement.

6. Procédé selon les revendications 1 à 5, dans lequel, pour la détermination d'un nom de rue,
premièrement, on sélectionne en fonction de leur existence dans un répertoire de rues les noms de rues candidats avec les numéros de maisons associés saisis,
deuxièmement, on sélectionne les candidats restants en fonction du nombre des caractères en comparaison avec le nombre déterminé des caractères issus de l'évaluation OCR, et
troisièmement, on sélectionne les candidats restants dans la comparaison, Se rapportant à la position, des caractères des candidats aux caractères de l'évaluation OCR.

7. Procédé selon la revendication 1 à 6, dans lequel on cherche à l'aide d'une unité OCR de nombres les parties numériques, saisies avec des touches, des informations de distribution dans les ROI de zones d'adresse possibles et on détermine à l'aide des nombres trouvés la ligne d'adresse cherchée et son orientation.

8. Procédé selon la revendication 7, dans lequel on détermine à l'aide des nombres trouvés au moyen de l'unité OCR de nombres et à l'aide de leur position le champ de nom dans la ligne d'adresse.

9. Dispositif pour la reconnaissance d'informations de distribution sur des envois postaux, comportant
- un dispositif pour l'obtention d'images d'envois (17),
- une unité OCR (20, 100) pour l'évaluation automatique des images, comportant des informations de distribution, des surfaces d'envois, avec comparaison dans un répertoire,
- un dispositif pour le codage vidéo des images, contenant les informations de distribution, des surfaces d'envois avec au moins un poste de codage vidéo (40) qui comporte à chaque fois un clavier (50), un écran et une unité de saisie vocale constituée d'un microphone (60) et d'un module de reconnaissance de la parole (70),
- une unité de traitément (30) qui commande les flux de données entre les unités de saisie et de sortie du dispositif pour le codage vidéo et de l'unité OCR (20, 100),
dans lequel, dans l'unité de traitement (30), les candidats du module de reconnaissance de la parole (70) respectif sont sélectionnés avec les résultats incomplets et/ou non uniques de l'unité OCR (20, 100).

10. Dispositif selon la revendication 9, dans lequel, dans l'unité de traitement (30), le nombre de caractères déterminé dans l'unité OCR (20, 100) est comparé au nombre des caractères des candidats issus du module de reconnaissance de la parole (70) respectif et les candidats dont le nombre de caractères s'écarte du nombre de caractères de l'unité OCR (20, 100) de plus d'une valeur limite déterminée statistiquement sont éliminés.

11. Dispositif selon la revendication 9, dans lequel dans l'unité de traitement (30), les caractères déterminés dans l'unité OCR (20, 100) et munis de probabilités sont comparés quant à leur position respective aux caractères des candidats issus du module de reconnaissance de la parole (70) respectif et le candidat ayant la coïncidence la plus probable et supérieure à une valeur limite déterminée statistiquement est sélectionné.
